# EUROPÄISCHE PATENTSCHRIFT

(11) **EP 2 894 408 B1**
(45) Veröffentlichungstag und Bekanntmachung des Hinweises auf die Patenterteilung: **04.09.2019**
(21) Anmeldenummer: 14151038.8
(22) Anmeldetag: 14.01.2014
(51) Int. Cl.: F24D 19/10, F16K 31/04, G05D 23/19

(54) **Verfahren zum Temperieren von Räumen eines Gebäudes**
Method for controlling the temperature in the rooms of a building
Procédé de régulation de la température de pièces d'un bâtiment

(43) Veröffentlichungstag der Anmeldung: 15.07.2015
(73) Patentinhaber: Möhlenhoff GmbH, 38229 Salzgitter (DE); eQ-3 Entwicklung GmbH, 26789 Leer (DE)
(72) Erfinder: Drescher, Rainer, 31188 Holle (DE); Redeker, Heinz-Gerhard, 26789 Leer (DE)
(74) Vertreter: Döring, Roger

(56) Entgegenhaltungen:
- EP-A1- 2 530 390
- WO-A2-2009/072744
- DE-A1-102008 049 619
- DE-A1-102008 051 275
- DE-A1-102010 024 280
- US-A1- 2012 048 381

## Beschreibung

Die Erfindung bezieht sich auf ein Verfahren zum Temperieren von Räumen eines Gebäudes entsprechend dem Oberbegriff des Patentanspruchs 1.

Ein solches Verfahren geht beispielsweise aus der EP 2 530 390 A1 hervor.

Mit einem derartigen Verfahren wird in moderner Technik die Temperatur in den Räumen von Gebäuden aller Art geregelt. Dabei werden die Räume in Abhängigkeit von der Außentemperatur erwärmt oder gekühlt. In diesem Sinne wird den Räumen über in denselben installierte Heizkreise entweder ein Heizmedium, wie warmes Wasser, oder ein Kühlmedium, wie gekühltes Wasser, zugeführt. Das Wort "Heizkreis" gilt demnach sowohl für das Zuführen eines Wärmeträgers als auch eines Kühlmediums. Im folgenden wird das Verfahren nach der Erfindung für das Beheizen von Räumen beschrieben, stellvertretend auch für eine Kühlung, die bis auf das zu transportierende Medium in gleicher Weise wie die Beheizung durchgeführt wird.

In den mit den Heizkreisen ausgerüsteten Räumen sind Thermostate angeordnet, an denen eine Solltemperatur eingestellt werden kann. Bei einem Abweichen der Isttemperatur von der der Solltemperatur in einem Raum wird von dem zugehörigen Thermostat ein Signal zu einer in einem Heizkreisverteiler installierten Anordnung übertragen, durch welche die Wärmezufuhr zu dem entsprechenden Raum solange erhöht bzw. reduziert wird, bis die Solltemperatur wieder erreicht ist. Im Heizkreisverteiler sind ein Regler und Ventile angeordnet, von denen je eins in den Zulauf für das Heizmedium eines Heizkreises eingebaut ist. Die Ventile werden durch mit denselben verbundene Stellantriebe in Abhängigkeit von den Signalen der Thermostate der einzelnen Räume auf- und zugesteuert. Dabei können die Signale dem Regler leitungsgebunden oder auch über Funk übermittelt werden.

Aus der DE 10 2008 049 619 A1 geht ein Gebäudeheizsystem mit wenigstens zwei, ein Heizfluid umfassenden Heizkreisen hervor, bei welchem in einem Vorlaufrohr für das Heizfluid oder in einem Rücklaufrohr für dasselbe ein Stellglied zur Einstellung des Betriebes des zugehörigen Heizkreises vorhanden ist. In einem Verteiler sind drei Stellglieder vorgesehen, die einen elektrischen bzw. elektrothermischen Stellantrieb aufweisen. Mittels einer zu dem Gebäudeheizsystem gehörenden Recheneinheit wird ein Soll-Ist-Vergleich der einzustellenden Volumenströme der Heizkreise durchgeführt. Bei dem bekannten Verfahren nach der DE 10 2008 051 275 A1 sind zum Betätigen der Ventile Stellantriebe eingesetzt, die einen temperaturabhängigen Dehnkörper aufweisen, an dem ein elektrisches Heizelement, beispielsweise ein elektrischer Widerstand, angebracht ist. In Abhängigkeit von der Betriebsart der Ventile werden dieselben durch die Stellantriebe entweder geöffnet oder geschlossen, wenn das elektrische Heizelement durch den Regler an eine Spannungsquelle angeschlossen und dadurch erwärmt wird. Ein Arbeitskolben des Dehnkörpers des jeweiligen Stellelements verstellt dann den Stößel des zugehörigen Ventils. Dieses bekannte Verfahren arbeitet temperaturabhängig und damit relativ träge. Es muß außerdem für den Betrieb der zugehörigen Anlage eine ausreichend hohe Leistung zur Verfügung gestellt werden, um sicherzustellen, daß gegebenenfalls alle Ventile derselben gleichzeitig zu betätigen sind. Dokument EP 2 530 390 offenbart ein Verfahren zum Temperieren von Räumen eines Gebäudes gemäß des Präambel des Anspruchs 1.

Aus der eingangs erwähnten EP 2 530 390 A1 geht ein Verfahren zum Heizen einer Vielzahl von Räumen eines Gebäudes hervor, bei dem ein Heizsystem mit einer Wärmequelle und mindestens einem Wärmetauscher für jeden Raum verwendet wird, der von einem Regelventil geregelt wird. Die Regelventile können einen mit einem elektrischen Motor ausgerüsteten Stellantrieb aufweisen. Die Stellantriebe regeln den "Offen"-Zustand der Regelventile in Abhängigkeit vom Wärmebedarf, wobei die Regelventile durch die Stellantriebe in zeitlich verteilter Weise geregelt werden. Zumindest ein Regelventil wird so geregelt, dass es geöffnet ist, wenn kein Wärmebedarf besteht.

Der Erfindung liegt die Aufgabe zugrunde, das eingangs geschilderte Verfahren so zu gestalten, daß es bei vermindertem Energieaufwand eine schnelle Reaktion bei Temperaturänderungen in den Räumen des Gebäudes ermöglicht.

Diese Aufgabe wird entsprechend dem kennzeichnenden Merkmal des Patentanspruchs 1 gelöst.

Durch einen elektrischen Motor betätigte Stellantriebe sind beispielsweise in der DE 10 2010 024 280 A1 beschrieben. Die elektrischen Motoren halten ihre Position, sobald sie von der Spannungsquelle getrennt sind und damit der ihren Betrieb veranlassende elektrische Strom abgeschaltet ist. Wenn alle bei diesem Verfahren eingesetzten Motoren bzw. alle Stellantriebe von der Spannungsquelle getrennt sind, wird daher für den Betrieb der zugehörigen Anordnung keine Energie benötigt. Im Bedarfsfall drehen die Läufer der Motoren unabhängig von thermischen Vorgängen nach ihrer Verbindung mit der Spannungsquelle sofort in eine neue Position, in der sie nach Trennung von der Spannungsquelle wieder stabil stehen bleiben. Eine Korrektur der Temperatur in einem Heizkreis kann also schnellstens durchgeführt werden, indem der Motor des für diesen Heizkreis eingesetzten Stellantriebs kurzzeitig eingeschaltet wird.

Diese Funktion der mit einem elektrischen Motor ausgerüsteten Stellantriebe wird bei dem Verfahren nach der Erfindung dadurch besonders vorteilhaft ausgenutzt, daß immer nur der Motor eines einzigen Stellantriebs eingeschaltet wird. Da dessen für eine Verstellung des zugehörigen Ventils benötigte Betriebsdauer sehr kurz ist, können die Motoren aller Stellantriebe auch dann, wenn für alle Heizkreise gleichzeitig oder nahezu gleichzeitig eine Temperaturänderung durchgeführt werden soll, jeweils einzeln und getrennt voneinander mit der Spannungsquelle verbunden werden. Eine merkbare Verzögerung bei der Temperaturregelung für die einzelnen Räume eines Gebäudes tritt nicht auf. Insgesamt braucht daher bei Einsatz dieses Verfahrens für eine Heizungsanlage nur Energie für einen einzigen Stellantrieb vorgehalten zu werden, die durch den Regler dem einen Motor oder nacheinander zwei oder mehr Motoren zur Verstellung des zugehörigen Ventils zugeführt wird. Die Raumtemperatur in den Räumen eines Gebäudes wird außerdem bei Einsatz dieses Verfahrens wesentlich schneller geregelt als bei Verfahren, die mit temperaturabhängigen Stellantrieben arbeiten.

Das Verfahren nach der Erfindung wird anhand der Zeichnungen als Ausführungsbeispiel erläutert.

Es zeigen:
Fig. 1 in schematischer Darstellung ein Schnittbild eines Gebäudes mit mehreren Räumen.
Fig. 2 eine Einzelheit aus Fig. 1 in vergrößerter Darstellung.
Fig. 3 eine Einzelheit aus Fig. 2 in weiter vergrößerter Darstellung.

Bei dem Verfahren nach der Erfindung werden in den Stellantrieben elektrische Motoren eingesetzt, bei denen es sich beispielsweise um Gleichstrommotoren oder Schrittmotoren handeln kann. Sie werden im folgenden kurz als "Motoren" bezeichnet. Die Motoren können jeweils mit einer Elektronik ausgerüstet sein. Es ist jedoch auch möglich, eine für alle Motoren gemeinsame Elektronik zentral in einem Regler vorzusehen, der in einem Heizkreisverteiler angeordnet ist.

An die Motoren ist in praktischer Ausführung ein Getriebe angeschlossen, das auf den Stößel des jeweils zu verstellenden Ventils einwirkt. Die Drehbewegung der mit einer Welle ausgerüsteten Läufer der Motoren wird durch das Getriebe in die erforderliche translatorische Bewegung umgesetzt. Außerdem wird die relativ hohe Drehzahl der Läufer der Motoren durch das Getriebe in eine langsamere geradlinige Bewegung umgewandelt. Das Getriebe ist mit Vorteil als selbsthemmendes Getriebe ausgeführt, wodurch das Einhalten der stabilen Position der Motoren nach ihrem Abschalten von der Spannungsquelle unterstützt wird, Auf den Aufbau der Motoren und ihre Funktionsweise wird in der folgenden Beschreibung nicht näher eingegangen.

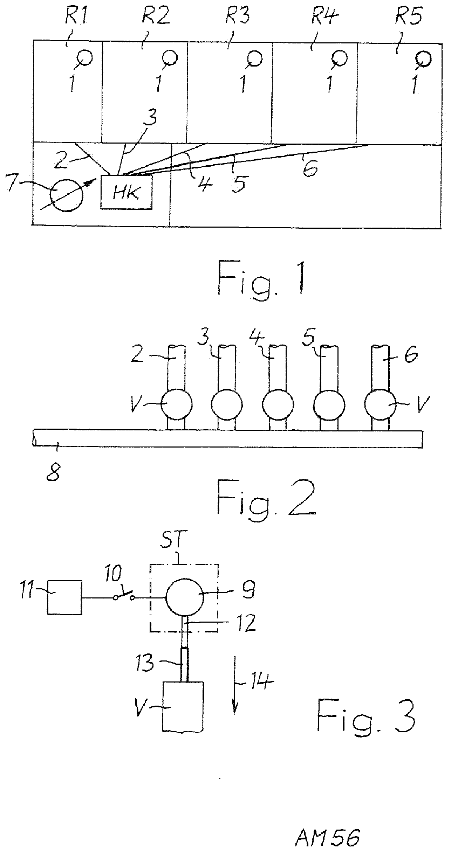

Fig.1 zeigt in einer sehr schematischen Darstellung eine Ansicht eines Gebäudes G mit fünf Räumen R1 bis R5, in denen jeweils ein Gerät 1 angeordnet ist, durch welches die in dem jeweiligen Raum herrschende Temperatur erfaßt wird. Ein solches Gerät 1 kann mit Vorteil ein nur den Istwert der Raumtemperatur erfassender Sensor sein. Es kann aber auch ein Sensor sein, der sowohl den Istwert als auch den Sollwert der Raumtemperatur erfaßt. In dem Gebäude G ist außerdem ein Heizkreisverteiler HK installiert, an den zu den Räumen R1 bis R5 führende Rohre 2, 3, 4, 5 und 6 angeschlossen sind, die mit in den Räumen R1 bis R5 angeordneten Heizkreisen

verbunden sind. Die Rohre 2 bis 6 dienen zur Zuführung eines Heizmediums, vorzugsweise Wasser, an die Heizkreise. Als Heizkreise können beispielsweise Flächenheizsysteme, Radiatoren oder andere Wärmetauscher in den Räumen R1 bis R5 installiert sein. Es ist auch möglich, mehr als einen Heizkreis in einem Raum anzuordnen. Zu jedem dieser Heizkreise führt dann ein separates Rohr. Die Anzahl der Räume des Gebäudes G ist beliebig. Es können also auch mehr oder weniger als fünf Räume im Gebäude G vorhanden sein, die jeweils mindestens einen Heizkreis aufweisen.

Im Bereich des Heizkreisverteilers HK ist in dem Gebäude G außerdem ein Regler 7 angeordnet, der vorzugsweise mit einer elektronischen Speicherfunktion ausgerüstet ist. Dem Regler 7 können von den Geräten 1 der einzelnen Räume Signale zugeführt werden, und zwar entweder leitungsgebunden oder über Funk. Die Signale der Geräte 1 entsprechen beispielsweise nur dem Istwert der im jeweiligen Raum herrschenden Temperatur. Der Sollwert der Temperatur ist dann für jeden Raum des Gebäudes G im Speicher des Reglers 7 abgelegt. Bei einer Erfassung von Istwert und Sollwert der Raumtemperatur durch die Geräte 1 in den Räumen R1 bis R5 werden als Signale sowohl die Istwerte als auch die Sollwerte der Raumtemperatur zum Regler 7 übertragen. Bei einer Abweichung des Istwerts der Raumtemperatur vom im Regler 7 gespeicherten Sollwert werden im Heizkreisverteiler HK angeordnete Elemente im Ausgleichssinne geregelt. Diese Elemente werden anhand der Fig. 2 und 3 erläutert.

Im Heizkreisverteiler HK ist in jedem der Rohre 2 bis 6 ein Ventil V angebracht, das mit einem in Fig. 3 durch eine strichpunktierte Linie umrandeten Stellantrieb ST verbunden ist. Die Rohre 2 bis 6 sind mit einem Hauptrohr 8 verbunden, das aus einem nicht mit dargestellten Vorrat mit einem Heizmedium versorgt wird. Die folgenden Ausführungen beziehen sich auf ein Rohr, ein Ventil und einen Stellantrieb eines Heizkreises. Sie gelten im gleichen Sinne für alle Heizkreise.

Der Stellantrieb ST weist einen Motor 9 auf, der über einen Schalter 10 mit einer Spannungsquelle 11 verbindbar ist. Die Welle 12 des Motors 9 wirkt (unter Zwischenschaltung eines Getriebes) entsprechend Fig. 3 auf den Stößel 13 des Ventils V ein, der dadurch gegebenenfalls in Richtung des Pfeiles 14 verstellt wird. Das Ventil V wird dadurch gegebenenfalls in seine Schließstellung gebracht. Für die Bewegung des

Stößels 13 in Gegenrichtung zum Pfeil 14 wird derselbe durch den Motor 9 entlastet. Er wird dann durch die Rückstellfeder des Ventils V in dessen Offenstellung gebracht.

Das Verfahren nach der Erfindung arbeitet beispielsweise wie folgt:
Die Temperaturen in den Räumen R1 bis R5 werden durch die Geräte 1 als Istwerte erfaßt. Die zugehörigen Sollwerte der Raumtemperaturen sind im Regler 7 gespeichert. Wenn beispielsweise die Temperatur im Raum R1 den gespeicherten Sollwert unterschreitet, wird der Motor des im Rohr 2 angeordneten Stellantriebs ST kurzzeitig durch Schließen des Schalters 10 mit Strom versorgt. Der Stößel 13 des Ventils V wird dadurch entlastet und entgegengesetzt zur Richtung des Pfeils 14 bewegt, also in Richtung der Offenstellung des Ventils V. Die Zufuhr des Heizmediums zum Heizkreis des Raumes R1 wird dadurch erhöht, so daß die Raumtemperatur steigt. Der Motor 9 wird nur kurzzeitig eingeschaltet, beispielsweise für 5 Sekunden, und dann wieder von der Spannungsquelle 11 getrennt. Nach einer vorgegebenen Zeitdauer wird ein weiterer Istwert der Temperatur im Raum R1 abgefragt und gegebenenfalls zur weiteren Betätigung des Motors 9 verwendet. Wenn die Raumtemperatur den vorgegebenen Istwert überschritten hat, wird die Drehrichtung des Motors 9 umgedreht, so daß der Stößel 13 des Ventils V mit entsprechender Drosselung der Zufuhr des Heizmediums in Richtung der Schließstellung desselben bewegt wird,

Dieses für ein Ventil V bzw. einen Stellantrieb ST beschriebene Verfahren wird für alle Stellantriebe des Heizkreises HK durchgeführt, und zwar nacheinander jeweils nur für einen Stellantrieb. Die Motoren aller Stellantriebe werden also unabhängig voneinander in vorgebbarer Reihenfolge durch den Regler 7 jeweils kurzzeitig durch Schließen der Schalter 10 mit der Spannungsquelle 11 verbunden und dementsprechend mit Strom versorgt.

## Patentansprüche

1. Verfahren zum Temperieren von Räumen eines Gebäudes (G), in welchem eine Spannungsquelle (11) angeordnet ist, bei welchem in dem Gebäude (G) ein Heizkreisverteiler (HK) installiert wird, der einen Regler (7) und eine der Anzahl von im Gebäude (G) vorhandenen Heizkreisen entsprechende Anzahl von Ventilen (V) aufweist, von denen jeweils eins in einen Zulauf für ein Heiz- bzw. Kühlmedium eines Heizkreises eingebaut wird, bei welchem jedes Ventil (V) mit einem Stellantrieb (ST) ausgerüstet wird, durch welchen die den Durchfluß des Heiz- bzw. Kühlmediums bestimmende Stellung des Ventils (V) zwischen einer Offenstellung und einer Schließstellung als Endpositionen eingestellt wird, und bei welchem als Stellantrieb für jedes der Ventile (V) ein mit einem elektrischen Motor (9) ausgerüsteter Stellantrieb (ST) eingesetzt wird, **dadurch gekennzeichnet,**
- **dass** die Motoren (9) aller Stellantriebe (ST) jeweils einzeln und zeitlich getrennt voneinander mit der Spannungsquelle (11) mit der Maßgabe verbunden werden, dass immer nur der Motor (9) eines einzigen Stellantriebs (ST) zur Betätigung eines Ventils (V) durch den Regler (7) für eine vorgegebene Zeitdauer an die Spannungsquelle (11) angeschlossen und nach Ablauf der Zeitdauer unter Einhaltung der jeweiligen Position als stabile Position von der Spannungsquelle (11) getrennt wird, und
- **dass** die Motoren (9) aller Stellantriebe (ST) zur Umsetzung der Drehbewegung der mit einer Welle ausgerüsteten Läufer der Motoren (9) in eine translatorische Bewegung mit einem selbsthemmenden Getriebe ausgerüstet werden.

2. Verfahren nach Anspruch 1, **dadurch gekennzeichnet, dass** die für die einzelnen Räume (R1 bis R5) des Gebäudes (G) vorgesehenen Solltemperaturen im Regler (7) gespeichert werden.

3. Verfahren nach Anspruch 1 oder 2, **dadurch gekennzeichnet, dass** die in den einzelnen Räumen (R1 bis R5) herrschenden Temperaturen dem Regler (7) durch in den Räumen angebrachte, die jeweilige Temperatur erfassende Geräte (1) als Istwerte aufgegeben werden.

## Claims

1. Method for controlling the temperature of rooms in a building (G) in which a voltage source (11) is arranged, in which method a heating circuit distributor (HK) is installed in the building (G), which heating circuit distributor has a controller (7) and a number of valves (V) which corresponds to the number of heating circuits present in the building (G), in each case one of which valves is incorporated in a feed line for a heating or cooling medium of a heating circuit, in which method each valve (V) is equipped with an actuating drive (ST) by way of which the position of the valve (V), which position determines the throughflow of the heating or cooling medium, between an open position and a closed position as end positions is adjusted, and in which method an actuating drive (ST) which is equipped with an electric motor (9) is used as the actuating drive for each of the valves (V), **characterized**
- **in that** the motors (9) of all of the actuating drives (ST) are each, individually and at separate times from one another, connected to the voltage source (11) with the proviso that always only the motor (9) of a single actuating drive (ST) is connected to the voltage source (11) by the controller (7) for a prespecified period of time for the purpose of operating a valve (V) and, after the period of time has elapsed, is disconnected from the voltage source (11) while maintaining the respective position as a stable position, and
- **in that** the motors (9) of all of the actuating drives (ST) are equipped with a self-locking gear mechanism for the purpose of converting the rotational movement of the rotors, which are equipped with a shaft, of the motors (9) into a translatory movement.

2. Method according to Claim 1, **characterized in that** the setpoint temperatures which are provided for the individual rooms (R1 to R5) of the building (G) are stored in the controller (7).

3. Method according to Claim 1 or 2, **characterized in that** the temperatures which prevail in the individual rooms (R1 to R5) are passed, as actual values, to the controller (7) by devices (11) which are fitted in the rooms and detect the respective temperature.

## Revendications

1. Procédé de régulation de la température de pièces d'un bâtiment (G), dans lequel est disposée une source de tension (11), un distributeur de circuit de chauffage (HK) étant installé dans le bâtiment (G), lequel présente un régulateur (7) et un nombre de soupapes (V) correspondant au nombre de circuits de chauffage prévus dans le bâtiment (G), une des soupapes étant à chaque fois intégrée dans une alimentation pour un fluide de chauffage ou de refroidissement d'un circuit de chauffage, chaque soupape (V) étant équipée d'un entraînement de réglage (ST) par le biais duquel la position de la soupape (V) déterminant le passage du fluide de chauffage ou de refroidissement est ajustée entre une position d'ouverture et une position de fermeture en tant que positions de fin de course, et un entraînement de réglage (ST) équipé d'un moteur électrique (9) étant utilisé en tant qu'entraînement de réglage pour chacune des soupapes (V), **caractérisé en ce que**
- les moteurs (9) de tous les entraînements de réglage (ST) sont connectés à chaque fois individuellement et de manière séparée temporellement les uns des autres à la source de tension (11) avec la condition que seulement le moteur (9) d'un entraînement de réglage unique (ST) pour l'actionnement d'une soupape (V) par le régulateur (7) soit toujours raccordé à la source de tension (11) pendant une période de temps prédéfinie, et qu'à la fin de la période de temps, soit séparé de la source de tension (11) en conservant la position respective en tant que position stable, et
- **en ce que** les moteurs (9) de tous les entraînements de réglage (ST) pour convertir le mouvement de rotation des rotors des moteurs (9) munis d'un arbre en un mouvement de translation sont équipés d'une transmission autobloquante.

2. Procédé selon la revendication 1, **caractérisé en ce que** les températures de consigne prévues pour les pièces individuelles (R1 à R5) du bâtiment (G) sont mémorisées dans le régulateur (7).

3. Procédé selon la revendication 1 ou 2, **caractérisé en ce que** les températures régnant dans les pièces individuelles (R1 à R5) sont transmises en tant que valeurs instantanées au régulateur (7) par des appareils (1) montés dans les pièces, détectant la température respective.
